# EUROPÄISCHE PATENTSCHRIFT

(11) **EP 1 099 502 B1**
(45) Veröffentlichungstag und Bekanntmachung des Hinweises auf die Patenterteilung: **20.04.2005**
(21) Anmeldenummer: 00123811.2
(22) Anmeldetag: 02.11.2000
(51) Int. Cl.: B23D 25/12

(54) **Hochgeschwindigkeitsschere zum Querteilen von insbesondere dünnem Walzband**
Flying shears for cutting metal strip
Cisaille volante pour couper des bandes métalliques

(30) Priorität: 10.11.1999 DE 19953906
(43) Veröffentlichungstag der Anmeldung: 16.05.2001
(73) Patentinhaber: SMS Demag AG, 40237 Düsseldorf (DE)
(72) Erfinder: Grafe, Horst, 57271 Hilchenbach (DE); Loth, Volker, 57258 Freudenberg (DE); Merz, Jürgen, 57223 Kreuztal (DE)
(74) Vertreter: Valentin, Ekkehard, Dipl.-Ing.

(56) Entgegenhaltungen:
- DE-C- 464 803
- US-A- 4 004 479
- US-A- 4 402 240
- US-A- 5 207 138
- PATENT ABSTRACTS OF JAPAN vol. 017, no. 493 (M-1475), 7. September 1993 (1993-09-07) & JP 05 123919 A (ISHIKAWAJIMA HARIMA HEAVY IND CO LTD), 21. Mai 1993 (1993-05-21)

## Beschreibung

Die Erfindung betrifft eine Hochgeschwindigkeitsschere zum Querteilen von insbesondere dünnem Walzband mit wenigstens einem auf einer von zwei einander gegenüberstehenden Trommeln angeordneten Messer mit einer Schneidkante bzw. Schneide, das auf Vorschubgeschwindigkeit eines zu schneidenden Walzbandes beschleunigbar ist, und die Trommeln eine separat ansteuerbare Anstellvorrichtung in entweder eine Schneidposition oder in eine geöffnete Durchlaufposition besitzen, wobei die Trommeln sowohl in der geöffneten Position als auch in der Schneidposition durch eine an ihnen ausgebildete Verzahnung im Eingriff miteinander drehsynchronisiert sind.

Eine Trommelschere der beschriebenen Art ist bspw. aus DE-PS 475 512 bekannt. Bei dieser sind die Messer über einen Hebel an der Trommel angelenkt und arbeiten mit einer auf der Trommelwelle festsitzenden Nockenscheibe derart zusammen, daß die Messer nicht mehr radial kreisen, sondern parallel zueinander und rechtwinklig zum Walzgut bewegt werden, wobei das Walzgut wie bei einer feststehenden Schere in einem üblicherweise senkrechten Scherenschnitt abgeschnitten wird.

Bei dieser Trommelschere wird ähnlich einer Trommelschere mit auf einer Kreisbahn laufenden Messeranordnung die Ausbildung von nadelförmigen Graten nicht in zufriedenstellender Weise vermieden, und ebenso ist die Abscherung des zu schneidenden Materials vielfach unvollständig.

Das US-Patent 5,207,138 beschreibt eine Hochgeschwindigkeitsschere zum Querteilen von Bandmaterial mit einer oberen und einer unteren Messertrommel, welche unter Verwendung von Hydraulikzylindern mit einer Anstellvorrichtung auf Abstand gebracht, sodann in Rotation beschleunigt werden, bis die Umlaufgeschwindigkeit der Trommeln der Zufuhrgeschwindigkeit eines zu teilenden Walzbandes entspricht. Sodann werden die Trommeln relativ in Schneidposition gebracht und das Band zerschnitten. Die Trommeln werden über ein Verzweigungsgetriebe von einem Motor angetrieben, wobei das Getriebe einen elektronischen Rotations-Positions-Sensor besitzt, der über eine Kontrollvorrichtung die Anstellbewegung der beiden Trommeln bewirkt, sobald die Messer in zusammenwirkende Schneidposition gebracht sind. Die bekannte Schere beansprucht für den Betrieb einen vergleichsweise hohen Aufwand an Antriebs-, Getriebe-, Übertragungs-Steuerungs- sowie Anstellelementen.

Eine weitere Hochgeschwindigkeitsschere zum Querteilen von Walzband ist dem Dokument DE 198 09 813 A zu entnehmen. Sie betrifft eine Ausbildung der Schere zur Erzielung guter Schneidergebnisse bei Bandgeschwindigkeiten bis zu 30 m/sec bei minimalen Banddicken. Eine der Trommeln der Schere ist auf Schwingen so gelagert, daß eine Anstellvorrichtung aus die Schneidbewegung bewirkenden Antrieben und zwischen diesen und den Schwingen angeordneten Stützelementen besteht, und daß die Stützelemente auf eine Schnitte bewirkende Wirkstellung verkürzbar sind. Die Schneidwerkzeuge sind auf einer Trommel als Meiβel, und auf der anderen Trommel als Amboß bzw. einem als Amboß wirkenden Mantelbereich ausgebildet.

Die DE-OS 26 54 866 offenbart eine Drehtrommelschere für strangförmiges Walzgut. Sie besitzt eine Trommeldrehvorrichtung mit einer die beiden Trommeln koppelnden Kraftübertragung und einem Antrieb für den kontinuierlichen Drehantrieb der Trommeln mit solchen Geschwindigkeiten, daß die Tangentialgeschwindigkeiten der Scherblätter mit der Laufgeschwindigkeit des Materials synchronisiert sind. Die Schere weist eine Trommelstellvorrichtung mit einem zweiten Antrieb für das Verstellen einer Schertrommel zwischen einer geöffneten Durchlaufposition und einer zweiten Schneidposition auf. Ferner besitzt sie eine Steuereinrichtung für den Motor der Stellvorrichtung, welche in einem ersten Schermoment das Anlaufen der Schertrommel aus der ersten Stellung in die Schneidposition und das Zurückstellen in die geöffnete Position veranlaßt, wobei der Anstellmotor zum Stillstand gebracht wird.

Weiterhin ist vorgesehen, daß die erste und zweite Schertrommel ein Durchmesserverhältnis von 2:3 aufweisen und so übersetzt sind, daß drei Umdrehungen der ersten Trommel auf zwei Umdrehungen der zweiten Trommel entfallen und die Trommelstellvorrichtung so gesteuert wird, daß jeweils die erste Trommel nach sechs Umdrehungen und die zweite Trommel nach vier Umdrehungen zu einem Schneidvorgang zusammentreffen.

Bei dieser Schermaschine ist der Aufwand an getriebetechnischen Elementen, Steuereinrichtung, unterschiedlichen Antriebsvorrichtungen sowie Stelleinrichtung mit erheblichem Aufwand verbunden und erfordert insbesondere für eine außerordentlich exakte Schneidposition der Messer aufwendig spielfreie Getriebeelemente, wenn ein glatter, gratfreier Schnitt des Bandes erreicht werden soll.

Aus dem Dokument DE 464 803 C ist eine Schere für in Bewegung befindliches Walzgut bekannt, bei welcher die Messerträger durch zwei Umlaufkörper getragen und durch zwei mit ihnen gleichachsig angeordnete und verbundene Zahnräder gegeneinander gedreht werden. Diese Zahnradkörper selbst bilden die Messerträger. Die einzelnen Zähne haben Einschnitte, so dass zwei Zahnkränze vorhanden sind, zwischen denen hindurch das Walzgut bewegt wird. Die Schneidmesser, welche sich jeweils im Berührungspunkt der Teilkreise treffen, sind an einer oder mehreren Stellen zwischen den beiden Zahnkränzen angeordnet. Hinweise auf eine konstruktive Vereinfachung der Synchronisation von Trommelscheren bei Gewährleistung von hoher Schnittgenauigkeit finden sich nicht, obwohl die Zahnräder verstellbar sind.

Ausgehend vom vorgenannten Stand der Technik liegt der Erfindung die Aufgabe zugrunde, eine Hochgeschwindigkeits-Trommelschere für Band, und insbesondere für dünnes Band, anzugeben, welche die vorgenannten Schwierigkeiten und technischen Grenzen überwindet und insbesondere eine Vereinfachung des konstruktiven Aufwandes für die Synchronisation der Trommeln bei höchstem Anspruch an eine exakte Position der Schneidmesser beim Schneidvorgang gewährleistet.

Die Lösung der Aufgabe gelingt bei einer Hochgeschwindigkeitsschere der im Oberbegriff von Anspruch 1 genannten Art mit der Erfindung dadurch, dass die Verzahnung hierfür derart ausgebildet ist, daß bei großem Flankenspiel in geöffneter Position der Trommeln die Synchronisation gerade noch gewährleistet ist, wogegen in der Schneidposition sich ein Zahneingriff mit praktisch spielfreiem Flankenspiel der Verzahnung ergibt.

Mit Vorteil sind hierfür die Zahnräder des Trommel-Synchron-Zahntriebes mit Evolventenverzahnungen ausgebildet.

Durch diese Maßnahmen wird durch die permanente Synchronisation der beiden Trommeln sowohl in geöffneter, abstandserweiterter Position der Trommeln, als auch in zusammengefahrener Schneidposition ein zusätzliches externes Verzweigungsgetriebe mit zur Übertragung von Drehbewegungen auf die beiden Trommeln erforderlichen Doppelkardangelenkwellen überflüssig und damit ein erhebliches Investitionsvolumen der sonst üblichen Konstruktionselemente eingespart. Denn beide Trommeln sind sowohl in geöffneter als auch in Schneidposition mechanisch über Zahnräder, die auf ihren Trommelwellen sitzen, drehsynchronisiert und die Evolventen-Verzahnung ist hierfür entsprechend ausgebildet. Dabei ergibt sich das richtige Flankenspiel der Verzahnung zwangsläufig in der Schneidposition, und nur in dieser ist es auch erforderlich, um den exakten Messerspalt zu bewirken. Mit der Vergrößerung des Achsabstandes in geöffneter Position ist zwar zwangsläufig auch eine Vergrößerung des Flankenspiels verbunden, jedoch auch mit dieser Vergrößerung des Flankenspiels der Evolventen-Verzahnung ist die Synchronisation soweit gewährleistet, um das erforderliche Leerlauf-Drehmoment weiterhin zu übertragen.

Eine Ausgestaltung der Erfindung sieht vor, daß eine Trommel eine feststehende Lagerung, und die andere Trommel eine anstellbare Lagerung aufweist, deren Anstellung bevorzugt mittels kontrolliert antreibbare n Exzenterlagerungen ausgebildet ist. Zweckdienlich ist, daß beide Trommeln motorisch anstellbare, durch ein Zahnradgetriebe miteinander synchronisierbare Exzenterlagerungen besitzen.

Weiterhin ist zwecks ausgeglichenem Antrieb der beiden Trommeln, d.h. eine als treibende und die andere als getriebene Trommel,mit möglichst geringem Zahnflankenspiel vorgesehen, daß eine Trommel einen Drehantrieb mittels Elektromotor, und die andere Trommel eine Bremse, bevorzugt eine Elektrobremse, aufweist.

Weitere Ausgestaltungen sind entsprechend den Unteransprüchen vorgesehen.

Einzelheiten, Merkmale und Vorteile der Erfindung ergeben sich aus der nachstehenden Erläuterung einiger in den Zeichnungen schematisch dargestellter Ausführungsbeispiele. Es zeigen:
- Fig. 1a: ein Verzahnungsschema eines Trommelpaares in geöffneter Position,
- Fig. 1b: ein Verzahnungsschema eines Trommelpaares in Schnittposition,
- Fig. 2a: den geöffneten Messerspalt,
- Fig. 2b: die Schneidmesser in Schnittposition,
- Fig. 3a: den Zahneingriff der Evolventenverzahnung in Schnittposition,
- Fig. 3b: den Zahneingriff der Evolventenverzahnung in geöffneter Position,
- Fig. 4: die erfindungsgemäße Hochgeschwindigkeitsschere im Schnitt,
- Fig. 5: die Schere gemäß Fig. 4 in einer Draufsicht,
- Fig. 6: die Seitenansicht der Schere mit Rollgang und Treiber,
- Fig. 7: den schematischen Schnitt durch den Zahntrieb der Schere gemäß Fig. 6.

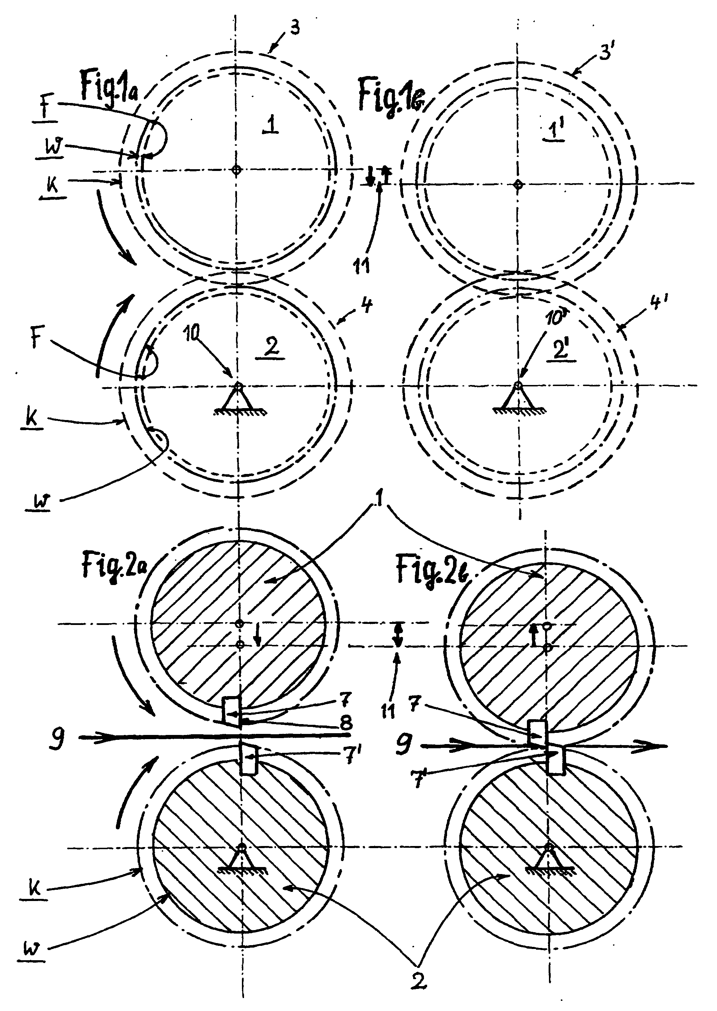

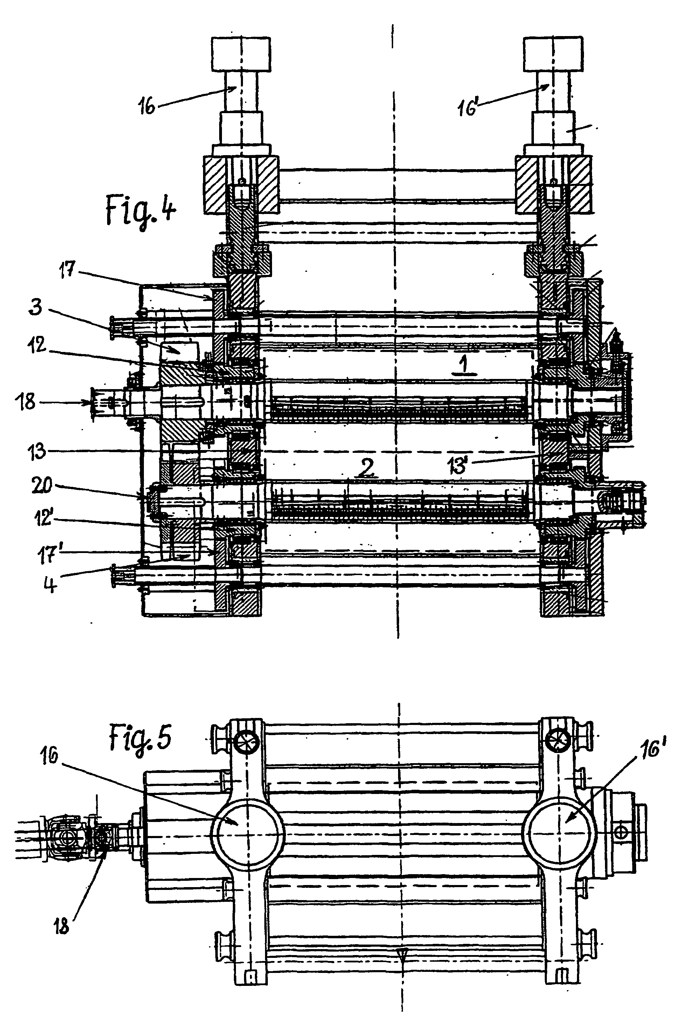

Figur 1a zeigt ein Verzahnungsschema des Trommelpaares 1, 2, von welchen die Trommeln 2, 2' in Festlagem 10, 10' gelagert sind. Die Trommeln 1, 1' sind lagerabstandsbeweglich bspw. mittels Exzenterbüchsen 12, 12' (Fig. 4) angeordnet.

Das Zahnradpaar 3, 4 der Fig. 1a ist in angehobenem Zustand des Zahnrades 3 d.h. in der geöffneten Position mit Fußkreis F, Kopfkreis K und Wälzkreis W dargestellt.

In Fig. 1b sind die Zahnräder 3', 4' in Schnittposition mit zugestelltem Schneidspalt gezeigt. Dabei sind die Fußkreise einander angenähert und die Wälzkreise wälzen in an sich bekannter Weise kraftschlüssig aneinander ab.

Die Fig. 2a und 2b zeigen die gleiche Situation mit der zuordenbaren Messerstellung der Messer 7, 7'. In der geöffneten Position der Fig. 2a läuft das Band 9 berührungslos durch den geöffneten Messerspalt zwischen den Messern 7, 7', während in der Fig. 2b das Band in an sich bekannter Weise von den einander überlappenden Messern 7, 7' geschnitten wird.

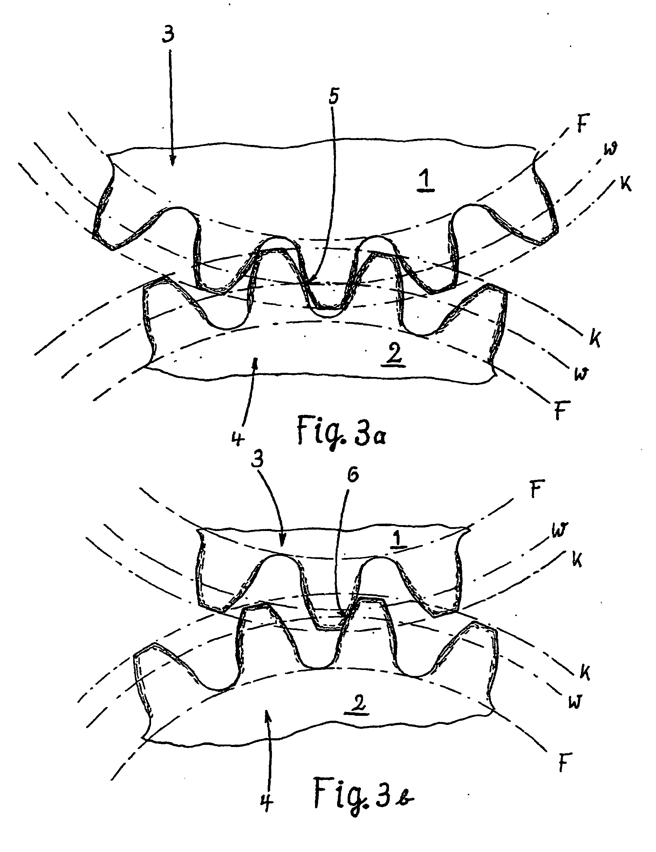

Die Fig. 3a, 3b zeigen ausschnittsweise den Zahnradeingriff jeweils eines Paares mit Evolventen-Verzahnung, und zwar die Fig. 3a den Eingriff einer Schneidposition, während Fig. 3b den Zahneingriff in geöffneter Position darstellt. Dabei sind jeweils Fußkreis F, Wälzkreis W und Kopfkreis K mit strichpunktierten Linien angedeutet. Die Darstellung zeigt, daß die Trommeln 1, 2 sowohl in der geöffneten Position der Fig. 3b, als auch in der Schneidposition der Fig. 3a durch eine an ihnen ausgebildete Verzahnung 3, 4 im Eingriff miteinander drehsynchronisiert sind, und daß die Verzahnung 3, 4 hierfür derart ausgebildet ist, daß bei großem Flankenspiel in der geöffneten Position der Trommeln 1, 2, wie aus Fig. 3b ersichtlich, die Synchronisation gerade noch gewährleistet ist, wogegen in der Schneidposition gemäß Fig. 3a sich ein Zahneingriff mit praktisch spielfreiem Flankenspiel der Verzahnung ergibt. Es ist dabei deutlich erkennbar, daß bei der geöffneten Position gemäß Fig. 3b die Wälzkreise W von den Fußkreisen F weiter entfernt sind, als in der Schneidposition gemäß Fig. 3a. Zumindest ist die Synchronisation in der geöffneten Position noch durch den Eingriff von mindestens jeweils einem Zahnpaar gerade noch gewährleistet.

Die Darstellung zeigt im übrigen, daß der Öffnungsspalt relativ groß ist. Dies genügt, um ein exakt geführtes Walzband von bspw. 1 bis 4 mm Dicke berührungsfrei durch den geöffneten Spalt zwischen den Schneidtrommeln hindurchzuführen, selbst dann, wenn der Bandkopf leicht aufgebogen ist.

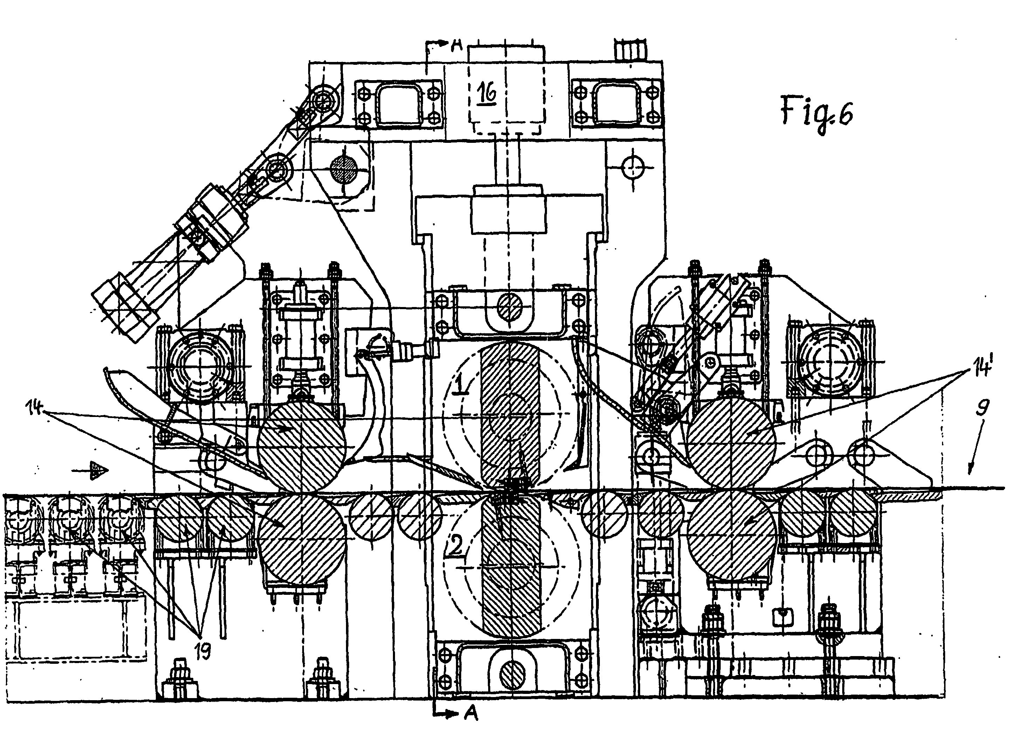

In der Figur 4 ist die Hochgeschwindigkeitsschere im Schnitt einer Ebene A-A in Fig. 6 gezeigt. Sie umfaßt die Messertrommeln 1 und 2, deren Wellen 18, 20 mittels Wälzlagem in drehbaren Exzenterbüchsen 12, 12' abstandsbeweglich gelagert sind. Sie sind durch ein Zahnradpaar 3, 4 im ständigen Eingriff miteinander drehsynchronisiert. Dabei ist das untere Zahnrad 4 radial geteilt und drehgefedert vorgespannt, wodurch erreicht wird, daß ein Abheben der Lastflanken bei der Drehmomentübertragung vollständig vermieden wird.

Nach der Darstellung in der Fig. 4 ist insofern eine Spezialausführung der Anstellvorrichtung gezeigt, als diese für jede der Wellen 18 und 20 eine gleichartige Exzenterbüchse 12, 12' vorsieht. Diese sind über eine separate Verzahnung über den gemeinsamen Zahntrieb 13, 13' miteinander synchron verbunden. Sie werden durch Verstellantriebe 17, 17' in ihrer Exzenterposition verstellt. Eine Synchronisation zwischen Verstellposition und Messerstellung der Trommeln 1, 2 kann in an sich bekannter Art und Weise durch eine Steuerung verwirklicht werden.

Weiterhin kann bei entsprechender Ausführung der Schere die feststehend gelagerte Trommel 1 nach Arretierung beider Trommeln 1, 2 aus ihren Lagerungen 10, 10' (Fig. 1a, Fig. 1b) mit hydraulischen Mitteln 16, 16' ausgehoben werden, um für einen Bandeinlauf eine genügend große Öffnung zu ergeben.

Fig. 5 zeigt die Schere in Draufsicht mit den Hydraulikaggregaten 16, 16' sowie mit der Haupt-Antriebswelle 18 mit Anschluß einer Kardangelenkwelle.

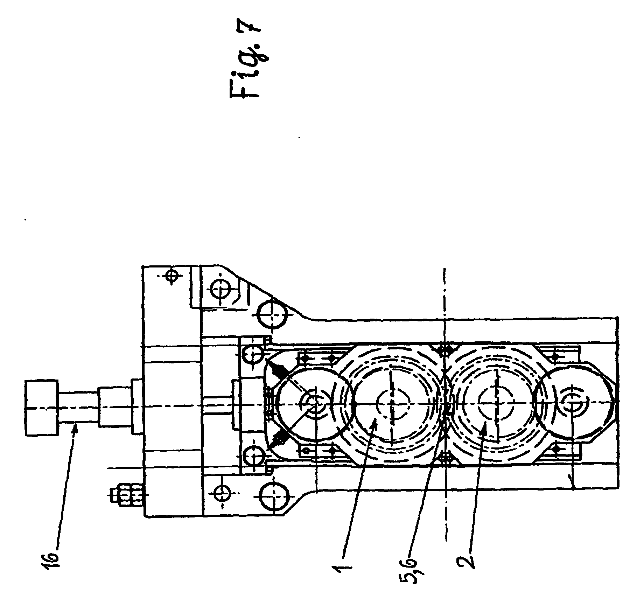

Fig. 6 zeigt in Seitenansicht die Schere mit einem auf dem Rollgang 19 zugeführten Walzband 9 im Moment des Schnittes. Fig. 7 zeigt den schematischen Schnitt durch den Zahntrieb der Schere.

Erfindungswesentlich ist zum Vermeiden eines unerwünschten Kontaktes zwischen den Messern 7, 7' und dem Band 9 bei geöffneter Trommelposition das Band 9 exakt in seiner horizontalen Lage geführt und wird durch Treib- oder Führungsrollen 14, 14' vor und hinter der Trommel den Schneidtrommeln 1, 2 unter Zugspannung gefördert.

### Bezugszeichenliste

- 1: Trommel
- 2: Trommel
- 3: Zahnrad
- 4: Zahnrad
- 5: Evolventen-Verzahnung
- 6: Evolventen-Verzahnung
- 7: Messer
- 8: Schneide
- 9: Walzband
- 10: Lagerung feststehend
- 11: Lagerung anstellbar
- 12: Exzenter-Lagerung
- 13: Zahntrieb
- 14: Treiber

- 16: Hydraulikzylinder
- 17: Verstell-Antrieb Exzenterlager
- 18: Haupt-Antriebswelle
- 19: Rollgang
- 20: Welle

## Patentansprüche

1. Hochgeschwindigkeitsschere zum Querteilen von insbesondere dünnem Walzband mit wenigstens einem auf einer von zwei einander gegenüberstehenden Trommeln (1, 2) angeordneten Messer (7) mit einer Schneidkante bzw. Schneide (8), das auf Vorschubgeschwindigkeit eines zu schneidenden Walzbandes (9) beschleunigbar ist, und die Trommeln (1, 2) eine separat ansteuerbare Anstellvorrichtung in entweder eine Schneidposition oder in eine geöffnete Durchlaufposition besitzen, wobei die Trommeln (1, 2) sowohl in der geöffneten Position, als auch in der Schneidposition durch eine an ihnen ausgebildete Verzahnung (3, 4) im Eingriff miteinander drehsynchronisiert sind, **dadurch gekennzeichnet, dass** die Verzahnung (3, 4) hierfür derart ausgebildet ist, dass bei großem Flankenspiel in geöffneter Position der Trommeln (1, 2) die Synchronisation gerade noch gewährleistet ist, wogegen in der Schneidposition sich ein Zahneingriff mit praktisch spielfreiem Flankenspiel der Verzahnung ergibt.

2. Schere nach Anspruch 1,
**dadurch gekennzeichnet,**
**dass** die Zahnräder (3, 4) des Trommel-Synchron-Zahntriebes mit Evolventen-Verzahnungen (5, 6) ausgebildet sind.

3. Schere nach Anspruch 1 oder 2,
**dadurch gekennzeichnet,**
**daß** eine Trommel (2) eine feststehende Lagerung (10), und die andere Trommel (1) eine anstellbare Lagerung (11) aufweist, deren Anstellung bevorzugt mittels kontrolliert antreibbaren Exzenterlagerungen (12) ausgebildet ist.

4. Schere nach Anspruch 1 oder 2,
**dadurch gekennzeichnet,**
**daß** beide Trommeln motorisch anstellbare, durch ein Zahnradgetriebe (13) miteinander synchronisierbare Exzenterlagerungen (12) besitzen.

5. Schere nach einem oder mehreren der Ansprüche 1 bis 4,
**dadurch gekennzeichnet,**
**daß** eine Trommel (1) einen Drehantrieb mittels Elektromotor, und die andere Trommel (2) eine Bremse, bevorzugt eine Elektrobremse aufweist.

6. Schere nach einem oder mehreren der Ansprüche 1 bis 5,
**dadurch gekennzeichnet,**
**daß** zum Vermeiden eines unerwünschten Kontaktes zwischen Messern (7, 7') und dem Band (9) bei geöffneter Trommelposition das Band (9) exakt in seiner horizontalen Lage geführt und durch Treib- und/oder Führungsrollen (14, 14') unter Zugspannung gefördert wird.

7. Schere nach einem oder mehreren der Ansprüche 1 bis 6,
**dadurch gekennzeichnet,**
**daß** die feststehend gelagerte Trommel (1) nach Arretierung beider Trommeln (1, 2) aus ihren Lagerungen (10) mit hydraulischen Mitteln (16, 16') herausnehmbar bzw. aushebbar ausgebildet ist, um für einen Bandeinlauf eine genügend große Öffnung zu ergeben.

8. Schere nach einem oder mehreren der Ansprüche 1 bis 7,
**dadurch gekennzeichnet,**
**daß** eines der Zahnräder (3-6) radial geteilt und drehgefedert vorgespannt ist.

## Claims

1. High-speed cutter for transverse cutting of, in particular, thin rolled strip with at least one knife (7), which is arranged on one of two mutually opposite drums (1, 2), with a cutting edge or blade (8), which can be accelerated to the speed of advance of a rolled strip (9) to be cut, and the drums (1, 2) have a separately controllable adjusting device in either one cutting position or in an opened transit position, wherein the drums (1, 2) are in rotationally synchronised engagement with one another not only in the opened position, but also in the cutting position by a toothing (3, 4) formed at the drums, **characterised in that** the toothing (3, 4) is constructed in such a manner that in the case of a large flank play in opened position of the drums (1, 2) the synchronisation is just still ensured, whereagainst in the cutting position a tooth engagement results with virtually play-free flank play of the toothing.

2. Cutter according to claim 1, **characterised in that** the gearwheels (3, 4) of the drum synchronising toothed drive are constructed with involute toothings (5, 6).

3. Cutter according to claim 1 or 2, **characterised in that** one drum (2) has a stationary mounting (10) and the other drum (1) has an adjustable mounting (11), the adjustment of which is preferably formed by means of eccentric bearings (12) drivable in controlled manner.

4. Cutter according to claim 1 or 2, **characterised in that** both drums have eccentric bearings (12) which are adjustable by motor and which can be synchronised with one another by a gearwheel transmission (13).

5. Cutter according to one or more of claims 1 to 4, **characterised in that** one drum (1) comprises a rotary drive by means of electric motor and the other drum (2) comprises a brake, preferably an electric brake.

6. Cutter according to one or more of claims 1 to 5, **characterised in that** for avoidance of an undesired contact between knives (7, 7') and the strip (9) in opening drum position the strip (9) is guided exactly in its horizontal position and is conveyed by driving and/or guiding rollers (14, 14') under tensile stress.

7. Cutter according to one or more of claims 1 to 6, **characterised in that** the drum (1) mounted in stationary position is constructed to be able to be withdrawn or lifted out of its bearings (10) by hydraulic means (16, 16'), after locking of both drums (1, 2), in order to give an opening of sufficient size for a strip entry.

8. Cutter according to one or more of claims 1 to 7, **characterised in that** one of the gearwheels (3-6) is radially divided and torsionally biased.

## Revendications

1. Cisaille à grande vitesse pour la découpe transversale de bande laminée notamment mince, comportant au moins une lame (7) disposée sur l'un de deux tambours (1, 2) placés l'un en face de l'autre et présentant une arête tranchante (8) ou un tranchant (8) qui peut être accéléré à la vitesse d'avance d'une bande laminée à découper (9), et les tambours (1, 2) possédant un dispositif de positionnement contrôlable séparément soit vers une position de coupe, soit vers une position de passage ouverte, les tambours (1, 2) étant synchronisés en rotation et en engrènement l'un avec l'autre, aussi bien en position ouverte qu'en position de coupe par une denture (3, 4) réalisée sur eux,
**caractérisée en ce que**
la denture (3, 4) est pour ce faire réalisée de manière à ce qu'avec un grand entre-dents, en position ouverte des tambours (1, 2), la synchronisation soit justement encore garantie, alors qu'on obtient par contre, en position de coupe, un engrènement des dents avec un entre-dents pratiquement exempt de jeu de la denture.

2. Cisaille selon la revendication 1,
**caractérisée en ce que**
les roues dentées (3, 4) de la transmission synchrone à tambours sont réalisées avec des dentures à développantes (5, 6).

3. Cisaille selon la revendication 1 ou 2,
**caractérisée en ce que**
un tambour (2) présente un palier fixe (10) et l'autre tambour (1) un palier positionnable (11) dont le positionnement est réalisé de préférence au moyen de paliers excentriques (12) entraînables de manière contrôlée.

4. Cisaille selon la revendication 1 ou 2,
**caractérisée en ce que**
les deux tambours présentent des paliers excentriques (12) positionnables de manière motorisée et pouvant être synchronisés l'un à l'autre par un engrenage (13).

5. Cisaille selon l'une quelconque ou plusieurs des revendications 1 à 4,
**caractérisée en ce que**
un tambour (1) présente une commande de rotation au moyen d'un moteur électrique et l'autre tambour (2) présente un frein, de préférence un frein électrique.

6. Cisaille selon l'une quelconque ou plusieurs des revendications 1 à 5,
**caractérisée en ce que**,
pour éviter un contact non souhaité entre les lames (7, 7') et la bande (9) en position ouverte du tambour, la bande (9) est guidée précisément dans sa position horizontale et convoyée à travers des rouleaux d'entraînement et/ou de guidage (14, 14') sous serrage par traction.

7. Cisaille selon l'une quelconque ou plusieurs des revendications 1 à 6,
**caractérisée en ce que**
les tambours (1) à paliers fixes, après l'arrêt des deux tambours (1, 2), peuvent être enlevés ou relevés de leurs paliers (10) par des moyens hydrauliques (16, 16') afin d'obtenir une ouverture suffisamment grande pour une entrée de la bande.

8. Cisaille selon l'une quelconque ou plusieurs des revendications 1 à 7,
**caractérisée en ce que**
une des roues dentées (3, 6) est divisée radialement et précontrainte par un ressort rotatif.
